(19) Europäisches Patentamt
European Patent Office
Office européen des brevets

(11) Publication number: **0 489 494 A1**

(12) **EUROPEAN PATENT APPLICATION**

(21) Application number: **91310100.2**

(22) Date of filing: **31.10.91**

(51) Int. Cl.5: **C22B 3/00**, B01J 23/96, B01J 38/60

(30) Priority: **22.11.90 GB 9025398**

(43) Date of publication of application: **10.06.92 Bulletin 92/24**

(84) Designated Contracting States: **AT BE CH DE DK ES FR GB GR IT LI LU NL SE**

(71) Applicant: **THE BRITISH PETROLEUM COMPANY P.L.C.**
**Britannic House, 1 Finsbury Circus**
**London EC2M 7BA(GB)**

(72) Inventor: **Ashton, David John, The British Petroleum Co.p.l.c**
**Chertsey Road, Sunbury-on-Thames**
**Middlesex, TW16 7LN(GB)**
Inventor: **Gelsthorpe, Michael Robert, British Petr.Co.p.l.c.**
**Chertsey Road, Sunbury-on-Thames**
**Middlesex, TW16 7LN(GB)**
Inventor: **Heaton Philip, The British Petroleum Co., p.l.c.**
**Chertsey Road, Sunbury-on-Thames**
**Middlesex, TW16 7LN(GB)**

(74) Representative: **Scott, Susan Margaret et al**
**BP INTERNATIONAL LIMITED Patents & Agreements Division Chertsey Road**
**Sunbury-on-Thames Middlesex TW16 7LN(GB)**

(54) **Catalyst recovery process.**

(57) A process for converting a solid catalyst comprising ruthenium and cerium into an aqueous solution suitable for use in repreparing the solid catalyst which process comprises the steps of:

(a) dissolving the solid catalyst in an effective amount of concentrated hydrochloric or hydrobromic acid,
(b) treating the product of step (a) with an effective amount of concentrated nitric acid,
(c) heating the product of step (b) until substantially all hydrogen chloride or hydrogen bromide is removed,
(d) diluting the product of step (c) with water.

EP 0 489 494 A1

The present invention relates to a process for treating spent catalysts containing ruthenium and cerium with the aim of recovering the ruthenium and cerium and reconverting them into fresh catalyst.

European patent application 232962 discloses a Fischer-Tropsch catalyst containing ruthenium and cerium which is long-lived and very active. Notwithstanding its long life, however, it is eventually necessary when operating commercially to replace this catalyst because of irreversible loss in activity. It is desirable, when replacement occurs, to be able to treat the spent catalyst so that the ruthenium and cerium are quantitatively recovered in solution and hence readily available for reconverting into fresh catalyst using the procedure described in EP 232962.

According to the present invention there is provided a process for converting a solid catalyst comprising ruthenium and cerium into an aqueous solution suitable for use in repreparing the solid catalyst which process comprises the steps of:

(a) dissolving the solid catalyst in an effective amount of concentrated hydrochloric or hydrobromic acid,

(b) treating the product of step (a) with an effective amount of concentrated nitric acid,

(c) heating the product of step (b) until substantially all hydrogen chloride or hydrogen bromide is removed,

(d) diluting the product of step (c) with water.

The present invention solves the problem defined above by a sequence of steps which ensures that substantially all the ruthenium and cerium present in the catalysts is taken up into and remains in solution. In this respect it is a feature of the present invention that step (a) employs either hydrochloric acid or hydrobromic acid which not only ensures that the cerium is maintained in the +3 (soluble) oxidation state but also avoids generation of volatile ruthenium tetroxide in any significant amounts.

The process of the present invention, while applicable in principle to any solid catalyst containing ruthenium and cerium, is particularly useful when applied to spent catalyst of the type defined in EP 232962. Such catalysts have the general formula

$$Ru_aA_bCeO_x$$

wherein

A is an alkali metal

x is a number such that the valence requirement of the other elements for oxygen is satisfied

a is greater than zero but less than the number required for Ru to constitute 5% w/w of the total composition

b is greater than zero but less than the number required for A to constitute 10% w/w of the total composition

When applied to such catalysts, the process of the present invention dissolves substantially everything with the exception of carbon, hydrocarbon wax and the like.

Considering step (a), the concentrated hydrochloric or hydrobromic acid used is suitably at least 4 molar preferably at least 6 molar. It has been found convenient to use 8 molar hydrochloric acid, which is the highest concentration readily usable at atmospheric pressure, since this provides the fastest dissolution in conventional laboratory equipment under reflux. Higher concentrations and temperatures can be used but this requires dissolution to take place in an appropriate pressure vessel.

It is preferred to use an amount of hydrochloric acid or hydrobromic acid in excess of that required to convert the ruthenium and cerium stoichiometrically into their corresponding trichlorides or tribromides. It is most preferred to use at least twice such a stoichiometric amount.

The product of step (a) is treated in step (b) with an effective amount of concentrated nitric acid. The concentrated nitric acid used is suitably at least 4 molar and preferably the highest concentration available. Commercial concentrated nitric acid, containing ca 68% by weight $HNO_3$, is particularily suited for this application. It is also possible to use fuming nitric acid in this step.

It is desirable to add the minimum amount of nitric acid necessary to convert the soluble ruthenium and cerium trichlorides or tribromides into the corresponding nitrate salts. Since the exchange reaction is not perfectly efficient, it is preferred to add an amount in the range corresponding to between 100 and 150% of stoichiometric.

After treatment with nitric acid, the product of step (b) is heated in step (c) until substantially all the hydrogen chloride or hydrogen bromide driven off. This is suitably carried out at a temperature in the range 50°C to 150°C.

The product of step (c) which is generally a red brown sticky liquid, is unstable and tends to precipitate ruthenium as ruthenium dioxide over a period of time. It is preferred therefore to dilute the product with water as soon as possible after step (c). The amount of water added is such as to produce a solution having

ruthenium and cerium concentrations typical of those used in the catalyst preparation disclosed in EP 232962. Such solutions are typically less than 1 molar in ruthenium and cerium.

The dissolved material can be optionally filtered at any stage in the process to remove wax, carbon and the like. It is most convenient to effect filtration after step (d) before a fresh batch of catalyst is prepared according to EP 232962.

The present invention is now illustrated by the following Examples.

Example 1 Treatment of original catalyst

In this experiment a sample of catalyst having the following Chemical Analysis was used:

| | |
|---|---|
| Ru (wt%) | 0.525 |
| Ce (wt%) | 77.2 |
| K (ppm) | 140 |
| Ru : Ce wt ratio | $6.80 \times 10^{-3}$ |

8M HCl aq (590ml) was added to fresh $Ru/CeO_2$ catalyst powder (100.0g) in a 1 litre round-bottomed flask, fitted with a Liebig condenser. The mixture was refluxed for 12h, evolving $Cl_2$ gas and giving a dark brown solution of Ru and Ce salts in excess HCl. When the solution had cooled below 60°C, it was filtered through glass-fibre filter paper (Whatman GF/C). A negligible quantity of solid remained undissolved. This solution is hereinafter referred to as the mother liquor.

The mother liquor was converted to a solution of nitrate salts by addition of 174g concentrated (68% w/w) $HNO_3$, and evaporation of the mixture to a viscous red liquid using a rotary evaporator (Buchi Rotavapor-R). The evaporation was achieved in ca 45 min using water bath temperatures of 95-100°C and absolute pressures of 3-50kPa. Distilled water (400ml) was added, and the red-brown solution filtered through glass-fibre filter paper (Whatman GF/C). A negligible quantity of solid material was removed. $KNO_3$ solution (2.86g $KNO_3$ dissolved in 122g distilled water) was added with stirring, and the mixture made up to 2.21 litres with distilled water.

Example 2 Preparation of catalyst from dissolved Ruthenium and Cerium

The solution of precipitant was made by dissolving $NH_4HCO_3$ (200.0g) in distilled water (1.65 litres), and the pH adjusted to 8.5 units by addition of concentrated $NH_3$ aq (35% w/w). This solution is hereinafter referred to as solution B and the product of Example 1 as solution A.

The $Ru/CeO_2$ gel was precipitated by a continuous method using the apparatus shown in Figure 1. Solution A was fed through pipe 3 and solution B was fed simultaneously through the precipitant delivery ring 2 to the constant head mixing vessel 1 via peristaltic pumps (not shown) at a flow rate sufficient to control the pH in the mixing vessel 1 as measured by the pH electrode 5 between 6.2 and 6.4 units. Efficient mixing of solutions A and B was achieved by the high-shear mixer head 4 (Silverson L4R). When stable pH was attained, the suspended precipitate was continuously bled off via the overflow pipe 6 and filtered on a 5 litre Buchner funnel/flask to yield a green-grey solid and a colourless filtrate.

The solid was slurried with distilled water (1.5 litre) using a high-shear mixer (Silverson L4R) and filtered. This washing procedure was repeated twice more and the solid was dried in an oven (110°C, 17h) to yield 84.5g of dried gel.

The dried gel was pressed into tablets in a 35mm die at 10 tons. The tablets were crushed and sieved to 500-1400um. A portion (ca 20g) was given the following heat treatment in flowing $N_2$ gas (ca 70ml/min):

$$20°C \xrightarrow{10\ c/min} 450°C/3h \xrightarrow{10\ c/min} 20°C.$$

The heat-treated catalyst was exposed to air and stored in screw-top jars.

The new catalyst had the following Chemical Analysis

| | |
|---|---|
| Ru(wt%) | 0.503 |
| Ce(wt%) | 78.8 |
| K (ppm) | 20 |
| Ru : Ce wt ratio | $6.38 \times 10^{-3}$ |

The ruthenium recovery calculated from the Ru : Ce wt ratios was 93.8%. The recovery of cerium, based on losses measured in the filtration and washings, was more than 99.9%.

Example 3 Catalyst Testing

A sample of the original catalyst and the product of Example 2 were compared for the conversion of synthesis gas. An activity test was employed using 2 ml volumes of catalyst reduced in situ with $H_2$ - (300°C, 30 barg). Synthesis gas ($H_2$ : CO mole ratio 2:1) was introduced at 225°C (2500 GHSV 30 barg) and the temperature raised to ca 290°C for measurement of CO conversion. The following results were obtained after 48 hours on stream.

| Original Catalyst | | Example 2 Product |
|---|---|---|
| Bed Temperature (°C) | 293 | 292 |
| CO conversion (%) | 59.36 | 66.33 |

## Claims

1. A process for converting a solid catalyst comprising ruthenium and cerium into an aqueous solution suitable for use in repreparing the solid catalyst which process comprises the steps of:-
   (a) dissolving the solid catalyst in an effective amount of concentrated hydrochloric or hydrobromic acid,
   (b) treating the product of step (a) with an effective amount of concentrated nitric acid,
   (c) heating the product of step (b) until substantially all hydrogen chloride or hydrogen bromide is removed,
   (d) diluting the product of step (c) with water.

2. A process according to claim 1 in which the catalyst has the general formula:

   $Ru_aA_bCeO_x$

   wherein
   A is an alkali metal
   x is a number such that the valence requirement of the other elements for oxygen is satisfied
   a is greater than zero but less than the number required for Ru to constitute 5% w/w of the total composition
   b is greater than zero but less than the number required for A to constitute 10% w/w of the total composition

3. A process according to either claim 1 or claim 2 wherein the concentration of hydrochloric acid or hydrobromic acid is at least 4 molar.

4. A process according to any one of the preceding claims wherein the amount of hydrochloric acid or hydrobromic acid used is at least twice the stoichiometric amount required to convert ruthenium and cerium to the corresponding trichlorides or tribromides.

5. A process according to any one of the preceding claims wherein the concentration of nitric acid is at least 4 molar.

6. A process according to any one of the preceding claims wherein the amount of nitric acid used is between 100 and 180% of the stoichiometric amount required to convert the ruthenium and cerium

trichlorides and tribromides into the corresponding nitrate salts.

**7.** A process according to any one of the preceding claims wherein step (c) is carried out at a temperature of from 50-150 °C.

FIG.1

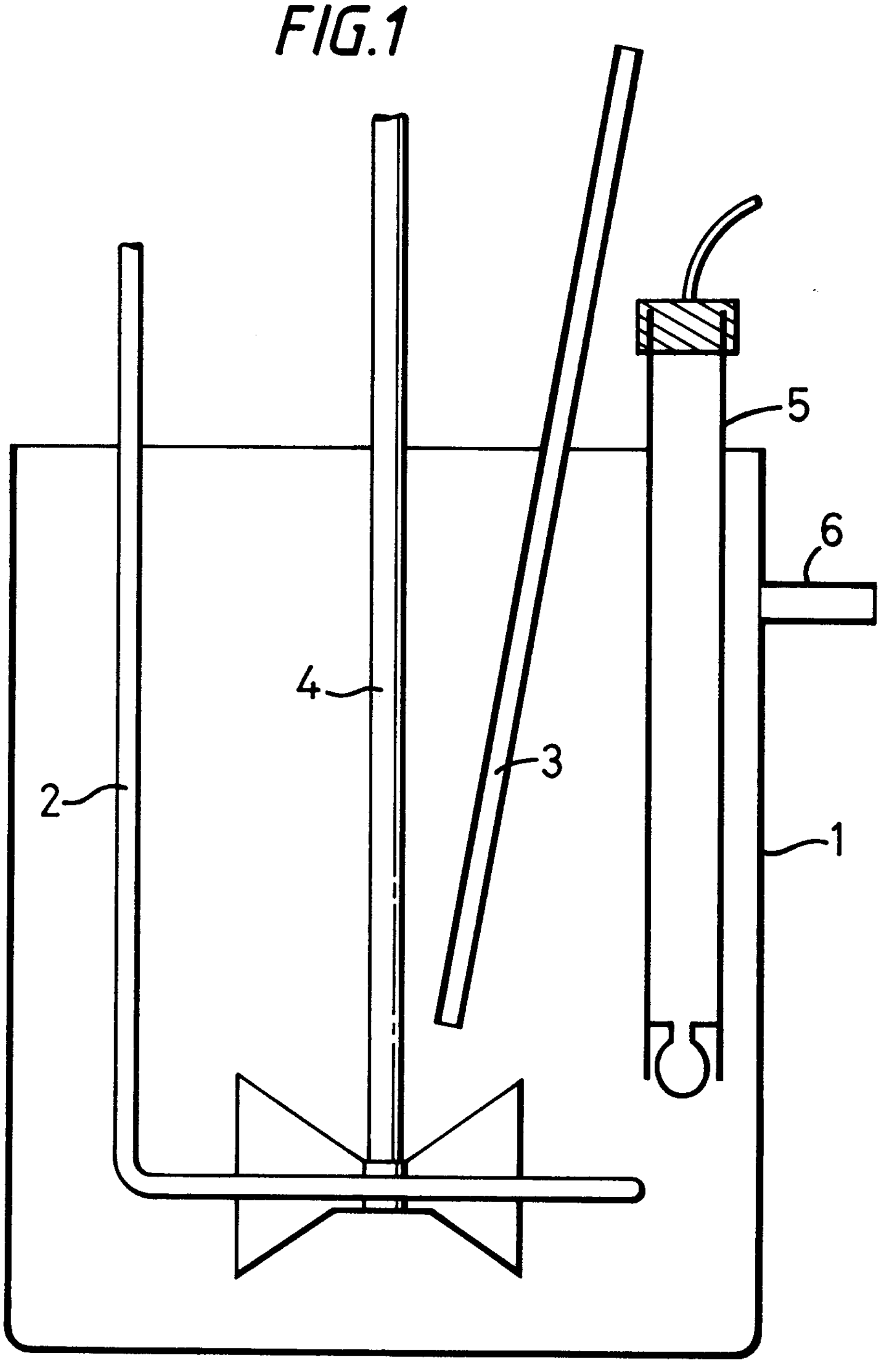

European Patent Office

# EUROPEAN SEARCH REPORT

Application Number

EP 91 31 0100

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-2 849 406 (LANE)<br>* column 2, line 3 - line 33; claims 1-3; example I *<br>--- | 1,3,5,7 | C 22 B 3/00<br>B 01 J 23/96<br>B 01 J 38/60 |
| A | US-A-2 945 757 (HOEKSTRA)<br>* column 2, line 1 - line 7; claims 1,11 *<br>--- | 1,3,7 | |
| A,D | EP-A-0 232 962 (THE BRITISH PETROLEUM COMPANY)<br>* claim 1 *<br>----- | 2 | |

TECHNICAL FIELDS SEARCHED (Int. Cl.5)

C 22 B
B 01 J

The present search report has been drawn up for all claims

| Place of search | Date of completion of the search | Examiner |
|---|---|---|
| THE HAGUE | 13-12-1991 | CUBAS ALCARAZ J.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)